Europäisches Patentamt

European Patent Office

Office européen des brevets

(11) Publication number: **0 036 590**
**B1**

(12) **EUROPEAN PATENT SPECIFICATION**

(45) Date of publication of patent specification: **03.12.86**

(21) Application number: **81101899.3**

(22) Date of filing: **14.03.81**

(51) Int. Cl.⁴: **H 02 J 7/02, H 01 M 10/46,
H 01 F 27/40**

(54) Battery charger for two cell holding modules.

(30) Priority: **25.03.80 US 133820**

(43) Date of publication of application:
**30.09.81 Bulletin 81/39**

(45) Publication of the grant of the patent:
**03.12.86 Bulletin 86/49**

(84) Designated Contracting States:
**DE NL SE**

(56) References cited:
**EP-A-0 027 959
DE-A-2 403 905
FR-A-1 400 235
FR-A-2 346 833
US-A-2 910 625
US-A-3 696 283
US-A-3 979 707
US-A-4 009 429**

(73) Proprietor: **GENERAL ELECTRIC COMPANY
1 River Road
Schenectady New York 12305 (US)**

(72) Inventor: **Terrell, Jacquelyn Bales
5922 N.W. 26th Street
Gainesville Florida (US)**
Inventor: **Mullersmann, Ferdinand Henry
2607 N.W. 19th Way
Gainesville Florida (US)**

(74) Representative: **Schüler, Horst, Dr. et al
Kaiserstrasse 41
D-6000 Frankfurt/Main 1 (DE)**

Courier Press, Leamington Spa, England.

# Description

The present invention is an improvement over existing battery charging systems of the type described in US—A—4,009,429. Such a charging system comprises a battery charger unit which can be plugged into an electrical receptacle and one of several mating cell-holding modules which holds and interconnects two or four rechargeable cells.

The foregoing battery-charging system has achieved wide commercial acceptance with the public. It is effective, relatively inexpensive and easy to use. The terminals on the battery charger unit, and the construction of the cell-holding modules are such that it is virtually impossible to incorrectly mate the cell holding module with the battery charger. An important feature of that charger is the fact that it can be plugged directly into an electrical receptacle so that the charger, when mated with the cell-holding module, forms an integral unit that is supported by the receptacle itself. This eliminates the need for electric extension cords and the like, and enables the consumer to leave the charger plugged into the receptacle during cell charging. Moreover, the charger current is such that the cells may be left on "on-charge" continuously.

A limiting feature of the prior art battery charger just described, however, is the fact that it can accept only one type of cell-holding module at any given time. Thus, should it be desired to charge immediately a pair of needed C-size cells while AA-size cells, for example, are being charged, the AA cell-holding module must be removed from the charger before charging is complete in order to substitute the C-size cell module. Another limitation of the existing charger is the fact that its charging current is restricted to about .1C, where C is the capacity of the cell in ampere-hours (Ah). Thus, for a typical AA-size battery having a nominal open circuit voltage of 1.2 volts and a capacity of .5 Ah, the C/10 charge current rate is 50 mA. At this rate, the recommended charging time is 12—16 hours. It is desirable to increase the charging rate up to about C/6 or .15C in order to enable the cells to attain full charge in 8—12 hours. This, however, requires a larger transformer and that the battery charging unit be able to withstand the greater mechanical loads transmitted to the blade connectors which plug into the outlet receptacle.

Although it is known from FR—A—1 400 235 or US—A—3 696 283 to simultaneously charge more than one circuit, these prior art chargers are bulky and heavy so that they are designed to be supported on the top of a table or permanently fixed to a wall. Line voltage is supplied thereto, in general, through a cord.

It is an object of the invention to provide an improved battery charger designed as a compact unit to be plugged directly into an electrical outlet receptacle and capable of charging simultaneously more than one external battery charging load.

The present invention solves the foregoing object through its features as set out in claim 1.

Further embodiments of the invention are claimed in the subclaims. The improved charger of the present invention provides versatility in several features not found in the prior art chargers. Specifically, it permits the simultaneous connection and charging of more than one external battery circuit or module, and permits the mixing of several types and kinds of loads which may require different charging currents. Thus, in the present invention, it is possible to charge simultaneously cells of the AA, C and D size, as well as 9-volt application batteries. Additionally, the battery charger is arranged so that, when cell-holding modules are mated with it, the system does not block the second receptacle of a duplex outlet. The charger is inexpensive, compact, attractive, and allows use in a duplex receptacle while leaving the second receptacle accessible for use by the consumer. In addition to the foregoing, it permits cells to be charged at significantly faster rates. This follows from the ability to package a larger transformer within a compact case while meeting the safety requirements of restricted mechanical stresses applied to the receptacle connectors.

For a complete understanding of the invention, reference should be made to the following detailed description and to the drawings, in which

Fig. 1 is a pictorial representation of a battery charger in accordance with the invention, illustrated with two types of cell-holding modules that may be used therewith;

Fig. 2 is a side elevation view of the battery charger;

Fig. 3 is a plan view of the charger;

Fig. 4 is a cross-sectional view taken along the line 4—4 of Fig. 3;

Fig. 5 is an exploded view of the components of the charger;

Fig. 6 is a partial view in cross-section taken along the line 6—6 in Fig. 5; and

Fig. 7 is a series of electrical diagrams of the battery charger and representative cell-holding modules that may be coupled to it.

Descriptions of the preferred embodiment

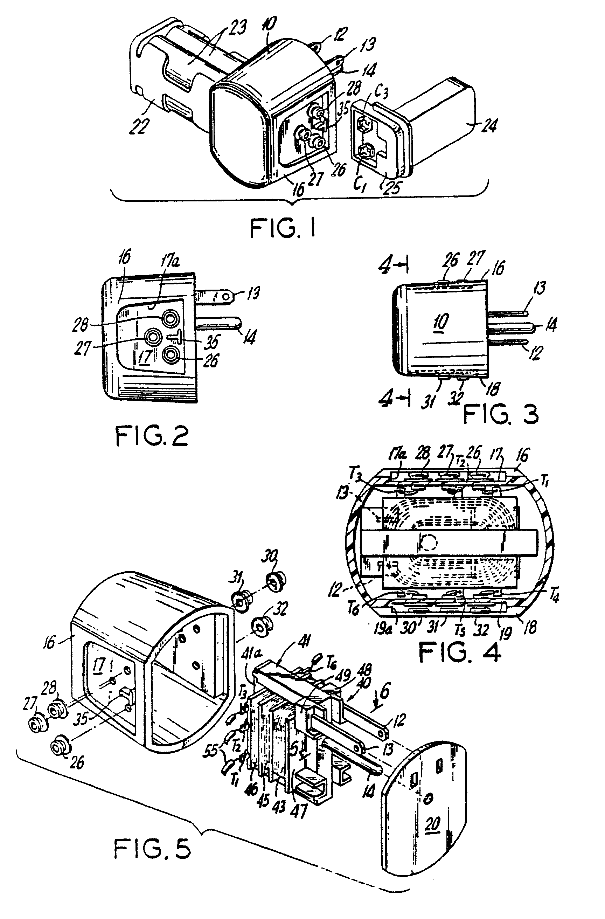

In Fig. 1, the battery charger of the invention is seen to include a housing member 10, a pair of blade connectors 12, 13, and a ground pin 14, all of which are received by the respective contacts of an electrical outlet receptacle (not illustrated) when the charger is plugged into the outlet for operation. These three connectors 12—14 serve not only to couple electrical power to the charger, but also to support physically the charger and the modules which are mated thereto.

Housing member 10 has a pair of opposed, generally parallel sides 16, 18 in which are formed recessed surfaces 17 and 19. Sides 16, 18 and blades 12, 13 are spaced apart along the same direction such that, when the charger is mated with two cell holding modules and plugged into a receptacle, it will not block the second outlet of a duplex outlet fixture. The connector blades 12, 13 and grounding pin 14 extend from inside the case through the housing cover member 20 which closes the open side of housing member 10.

In Fig. 1, two different types of representative cell-holding modules are shown. On the left side of the charger is a module 22 having a capacity for four AA-size cells 23. On the right of the charger, shown removed, is a 9-volt size battery 24 mated to an adapter 25. The cell-holding module 22 is described in detail in the above-mentioned U.S.—A—4,009,429, and also in U.S.—A—4,173,733, both issued to General Electric Company. The battery charging module 22, holding four AA-size batteries, is a three terminal holder mating with either one of the sets of terminals at the sides of the charger. The adapter/holder 25, on the other hand, is a two-terminal device adapted to mate with two of the three external terminals at either side of the charger. The external charging terminals are clearly visible in the drawings and are similar to the terminals at the top of the prior commercial charger described above. In this case, however, there are two separate sets of three external terminals, and they are located at opposite sides of the charger; one set, 26, 27 and 28 on recessed surface 17, and another set, 30, 31 and 32 on recessed surface 19. Terminals 26—28, 30—32, are snap-type terminals which releasably support the weight of the modules when the modules are snap-fastened onto the charger. It will be noted that the external terminals at the sides of the charger are asymmetrically situated with respect to the recessed surfaces 17, 19, so as to preclude inadvertent misconnection of a cell-holding module or adapter. The walls 17a, 19a, formed in the side of the housing by the recessing of the surfaces cooperate in the terminal locating function of the charger, in that the wall prevents a module from being turned around and connected with reversed polarity. Additionally, there is a small T-shaped projection 35 disposed between the terminals at each side of the battery charger. Its function is to assist in the orienting and disconnecting of the terminals of the module relative to the charger.

Referring to Figs. 4—5, the interior of housing 10, carries a charging transformer 40 comprising a core assembly 41, a primary winding 43 wound on the core, and two secondary windings 45, 46 also wound on the core. The transformer steps down the applied line voltage, the secondary windings supplying ac charging current at low voltage (e.g., 10 volts rms). As is conventional, the primary and secondary windings of the transformer are wound about a bobbin structure 47 which subsequently is inserted over the center leg of the core 41 before the back section 41a of the core is added to complete the magnetic circuit. In accordance with the invention, the transformer windings are selected to provide a nominal charging current of approximately .15C to the external terminals. Also in accordance with the invention, the transformer is connected to these external terminals such that the corresponding external terminals on the respective sides are oppositely poled electrically, the purpose of which will be explained shortly. The transformer core structure supports the blades 12, 13, which are mounted in insulating blocks 48, 49 comprising part of the bobbin 47.

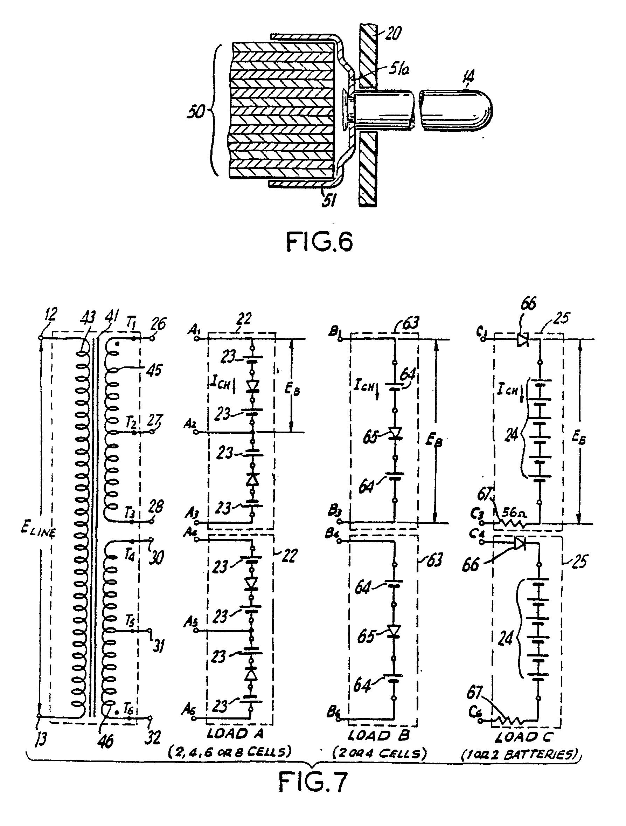

Encasing the core laminations 50 (separately illustrated) and forming an integral part of the core is a metal channel 51 which clamps together the laminations. This structure is shown in detail in Fig. 6, which is a view in partial cross-section along the line 6—6 in Fig. 5. As shown, channel member 51 also serves as a mounting plate for the grounding pin 14. To that end, it has a slightly raised section 51a in the vicinity where the pin 14 is joined to it.

A special feature of the invention is the ability of the charger to accommodate either one or two externally connected modules without any ancillary mechanical support. Since the transformer assembly and the housing containing the external terminals form a unitary mechanical structure, any forces applied to the housing are also transmitted to the transformer assembly. It will be seen, therefore, that torque and gravitational forces resulting from the affixing of an external module to one or both sets of external terminals are transmitted by the housing 10 to the transformer assembly and, consequently, to the blade connectors 12, 13 and grounding pin 14. In order to reduce the torque that would be applied to the connectors by connecting a single module or modules of different weight to the charger, thereby creating a mechanical imbalance, the casing, transformer windings and core all are made narrower in the dimension between the two module-receiving faces. Thus, the cross-section of the transformer core 41 is narrower in the direction of spacing between the two module-receiving faces than it is in the direction of spacing between the other two sides of the housing. In one preferred embodiment, the core cross-section is 1/4 inch×3/8 inch (6,35 mm×9,53 mm). Also, grounding pin 14 aids in resisting torque forces because it is mechanically and rigidly secured to the metal channel 51 of the transformer core.

Referring to Figs. 4 and 5, the transformer terminals $T_1$—$T_6$ are affixed to the core bobbin assembly for connection by wire leads 55 to appropriate ones of the terminals 26—28, 30—32. In practice, these leads 55 are first affixed to the internal part of the external terminals and subsequently are soldered to the transformer terminals $T_1$—$T_6$ prior to placement of the transformer assembly into the case 10. Thereafter, cover 20, which has cut-outs for receiving the blade connectors 12, 13, and grounding pin 14, is put into place to close the housing 10. Cover 20 is secured to the housing member 10 by any appropriate bonding method, for example, sonic welding.

Fig. 7 illustrates the electrical circuits that may be associated with the charger, which is shown on the left-hand side of the figure. As previously noted, the primary winding 43 is wired to terminal connectors 12, 13 for connection to line voltage $E_{LINE}$. Secondaries 45, 46 have their respective terminals $T_1$—$T_3$ and $T_4$—$T_6$ wired to external terminals 26—28 and 30—32, respectively, also as previously explained. The three figures to the right of the transformer schematically illustrate three types of loads, LOAD A, LOAD B and LOAD C, which may be encountered by the charger during use.

LOAD A represents the electrical schematic for battery-charging modules 22 of the type illustrated in Fig. 1, each holding two or four cells. With two such modules connected to the charger, up to eight AA-size cells can be charged at one time. These modules contain internal circuits for interconnecting the cells, and for rectifying the applied current. Rectification is brought about by the diodes connected in series with the cells. These diodes also preclude inadvertent discharge of the cells in the event of accidental shorting of any of the terminals $A_1$—$A_3$, or $A_4$—$A_6$. It will be appreciated that upon connection of the battery charger primary to an external source $E_{LINE}$, and assuming that two four-cell modules 22 are attached to the charger, charging current $I_{CH}$ will flow simultaneously through the cells connected between terminals $A_1$ and $A_2$, and through the two cells connected between terminals $A_5$ and $A_6$ of the second module. This is because the transformer secondaries are poled so that the corresponding external terminals are electrically out of phase. When the charger is connected to loads such as LOAD A, this opposite electrical polarity has not material significance, since each secondary will distribute no more than one-half the maximum total charging current during any half cycle irrespective of the number of cells held by the modules 22. Specifically, because the diodes 60, 61 are connected so as to be alternately conducting, no more than four cells are supplied with charging current during any half-cycle of line current.

LOAD B represents the type of load encountered by the charger when two C-size or two D-size cells 64 are connected to the charger in a two-cell module 63, which includes rectifying diode 65. Here the charger is sensitive to the flow of charging current. If the secondaires of the charger were improperly poled electrically, it would be possible for the charger to deliver the maximum total charging current during only one-half cycle of the input waveform, with no charging current being delivered during the other half of the waveform. This condition would subject the charger to very poor voltage and current regulation and, to a certain extent, would require the transformer to be designed to handle more primary current than necessary. For this reason, the corresponding external terminals of the charger 26, 30 are poled so as to be electrically out of phase while terminals 26 and 32 are in phase. Thus, when terminal 26 is at maximum positive amplitude, terminal 32 is also at maximum positive amplitude and terminals 28 and 30 are at maximum negative amplitude. And when loads of the LOAD B type are connected, current is delivered to the respective modules on separate half-cycles of the input wave. The same situation prevails when the charging loads such as LOAD C. This is the type of load encountered with adapter/battery combinations, such as illustrated in Fig. 1 by battery 24 and adapter 25. Here again, the adapter includes the diode 66, as well as a current limiting resistor 67 in order to protect the generally smaller size cells making up the battery from receiving excessive charging current.

The table below sets forth the charging current delivered at the minimum and maximum values of applied line voltage for the various types of loads shown, assuming that the two modules are connected to the transformer.

LOAD A (2, 4, 6 or 8 cells each rated at 500 mAh)

| $E_{LINE}$ (AC Volts) | $E_B$ (DC Volts) | $I_{CH}$ (mA) |
|---|---|---|
| 104 | 2.9 | 50 Min. |
| 127 | 2.9 | 100 Max. |

LOAD B (2 or 4 cells each rated at 1.0 Ah)

| $E_{LINE}$ (AC Volts) | $E_B$ (DC Volts) | $I_{CH}$ (mA) |
|---|---|---|
| 104 | 2.9 | 110 Min. |
| 127 | 2.9 | 160 Max. |

LOAD C (1 or 2 batteries each rated at 65 mAh)

| $E_{LINE}$ (AC Volts) | $E_B$ (DC Volts) | $I_{CH}$ (mA) |
|---|---|---|
| 102 | 8.7 | 8 Min. |
| 127 | 8.7 | 18 Max. |

It is seen that AA-size cells (LOAD A) rated at 400 mAh are charged nominally at a rate of .15C (75 mA) at $E_{LINE}$=115 volts. Typical C size and D size cells rated at 1.0 Ah will be charged at a rate of about .14C (140 mA) when line voltage is 115 volts. Batteries (LOAD C) rated at 65 mAh are charged at a .2C rate when line voltage is 115 volts. Battery charging current in this instance is limited by the 56 ohm resistor in the charging circuit of adapter 25, and could be increased by reducing the resistance value. Current draw is dependent upon the cell emf and its polarization voltage together with the transformer characteristics. However, charging current obtained in the present invention is significantly higher than that furnished in the prior single-module charger.

Phasing of the transformer secondary winding so that the corresponding external terminals are oppositely phased brings about operation at higher charging currents than would be obtained with in-phase secondaries. By way of comparison, for one case of LOAD B, a charger with in-phase secondaries produced charging currents averaging from 95 mA to 117 mA. Out-of-phase secondaries produced charging currents averaging from 112 mA to 146 mA, or 15%—25% higher.

While the use of two secondary windings is preferred, owing to the better current regulation obtained when changing from the two cell to four cell configurations of load A, it is possible to employ a single non-tapped secondary winding when poorer charge current regulation can be tolerated. In such case, the end terminals of the secondary winding are connected to the corresponding external terminals at both sides of the charger, instead of only one side. If this is done, it is preferable to employ rectifying diodes between the secondary winding and the external terminals so that charging current pulses supplied to the respective sets of terminals occur on alternate lobes of the sine wave. This improves the current regulation by insuring that a charging load connected to one set of terminals does not conduct current at the same instant as a load connected to the other set of terminals.

In other modifications, the charger may incorporate rectifying diodes internally of the housing as, for example, in cases where the cell-holding module does not have any rectifying means. The diodes would be connected between one of the transformer terminals $T_1$, $T_3$ or $T_4$, $T_6$ and the corresponding external terminal. It should also be noted that the rectifier could be connected so as to be compatible with certain cell-holding modules of the type illustrated in which diodes are incorporated therein.

From the foregoing, it will be seen that the improved charger of the present invention provides versatility in several features not found in the prior art chargers. Specifically, it permits the simultaneous connection and charging of more than one external battery circuit or module, and permits the mixing of several types and kinds of loads which may require different charging currents. The charger is inexpensive, compact, attractive, and allows use in a duplex receptacle while leaving the second receptacle accessible for use by the consumer. In addition to the foregoing, it permits cells to be charged at significantly faster rates. This follows from the ability to package a larger transformer within a compact case while meeting the safety requirements of restricted mechanical stresses applied to the receptacle connectors.

## Claims

1. A battery charging system comprising:
a pair of separate external battery holding modules (22) each associated with a separate battery circuit for receiving therein at least one rechargeable battery, each of said battery circuits including unidirectional current flow means for permitting the flow of current in only one direction through its respective battery circuit;
a housing (10) having first and second sets of external terminals (26 to 28, 30 to 32) disposed on surfaces (17, 19) on opposed sides (16, 18) of said housing, said housing having means (17a, 19a) for preventing said modules from being misconnected to said first and second sets of external terminals, one of said modules in said pair connected to and releasably supported by said first set of terminals while the other of said modules in said pair is electrically connected to and releasably supported by said second set of terminals, a corresponding terminal in each of said first and second sets of external terminals adapted to be interchangeably connected to only one terminal on each of said modules, said corresponding terminals in each of said sets having instantaneous opposite electrical polarity upon connection of said charging system to a source of current;
a transformer (40) inside said housing comprising a core member (41), a primary winding (43) and a secondary winding means (45, 46) electrically connected to each of said sets of external terminals internally of said housing for delivering charge current to each of said sets of external terminals; and
connectors (12, 13) electrically connected to said primary winding and extending through said housing intermediate the opposed sides for acceptance by an external electrical receptacle, said connectors being adapted to support said charging system when said connectors are disposed in said receptacle.

2. The battery charging system of claim 1, characterized in that the said external terminals are situated on surfaces bounded by a wall.

3. The battery charging system of claims 1 or 2, characterized in that the external terminals (26 to 28, 30 to 32) are situated on recessed surfaces (17, 19) in said opposed sides so as to form a wall bounding said surfaces.

4. The battery charging system of claim 3, characterized in that the external terminals (26 to 28, 30 to 32) are asymmetrically located relative to said recessed surfaces (17, 19).

5. The battery charging system of claim 1 or 2, characterized in that the housing (10) comprises a housing member open at a side between said opposed sides, and a mating cover (20) closing said open side, said mating cover (20) receiving said connectors (12, 13).

6. The battery charging system of claim 1, characterized in that the core member of said transformer (40) includes a frame (47, 51) extending therearound, the charger further comprising a ground pin connector (14) adapted for acceptance by the electrical receptacle, said ground pin connector being mechanically affixed to said core frame and extending therefrom through said housing.

7. The battery charging system of claim 1, characterized in that the core member (41) is oriented substantially parallel to said opposed sides (16, 18).

8. The battery charging system of claim 7, wherein the cross-sectional dimension of said core member (41) in the direction of spacing between said opposed sides (16, 18) is smaller than the cross-sectional dimension of said core member (41) in directions mutually orthogonal to said spacing direction.

9. The battery charging system of claim 1, wherein said transformer (40) and said housing (10) containing said external terminals (26 to 28, 30 to 32) form a mechanical assembly, said transformer and said housing acting in combination to transmit at least a portion of any forces applied to said housing to said transformer assembly and to said connectors.

10. The battery charging system of claim 1, wherein said first and second sets of external terminals (26 to 28, 30 to 32) are arranged to provide polarity keying thereof relative to the battery circuits connectable thereto.

11. The battery charging system of claim 1, wherein one of said battery circuits is carried by one of said battery holding modules and includes a first diode operative to permit charging current to flow through said one of said circuits only in one direction.

12. The battery charging system of claim 11, wherein said other of said battery circuits in said pair is carried by the other of said cell holding modules and includes a second diode operative to permit charging current to flow through said other of said circuits only in one direction.

**Patentansprüche**

1. Batterie-Ladesystem enthaltend:

zwei getrennte, externe Batterie-Haltemoduln (22), die jeweils einem getrennten Batteriekreis zugeordnet sind zur Aufnahme wenigstens einer wiederaufladbaren Batterie, wobei jeder der Batteriekreise unidirektionale Stromflußmittel aufweisen, die den Stromfluß nur in einer Richtung durch den entsprechenden Batteriekreis gestatten,

ein Gehäuse (10) mit ersten und, zweiten Sätzen externer Anschlüsse (26—28, 30—32), die auf Oberflächen (17, 19) auf gegenüberliegenden Seiten (16, 18) des Gehäuses angeordnet sind, wobei das Gehäuse Mittel (17a, 19a) aufweist, die verhindern, daß die Moduln mit den ersten und zweiten Sätzen externer Anschlüsse falsch verbunden werden, wobei der eine Modul in dem Paar mit dem ersten Anschlußsatz verbunden und von diesem lösbar gehaltert ist, während der andere Modul in dem Paar mit dem zweiten Anschlußsatz elektrisch verbunden und durch diesen lösbar gehaltert ist, wobei ein entsprechender Anschlüß in jedem der ersten und zweiten Sätze der externen Anschlüsse nur mit einem Anschluß auf jeden Modul austauschbar verbunden werden kann, wobei entsprechende Anschlüsse in jedem der Sätze eine augenblickliche entgegengesetzte elektrische Polarität hat beim Verbinden des Ladesystems mit einer Stromquelle,

einen Transformator (40) innerhalb des Gehäuses enthaltend einen Kernteil (41), eine Primärwicklung (43) und eine Sekundärwicklung (45, 46), die elektrisch mit jedem der Sätze der externen Anschlüsse innerhalb des Gehäuses verbunden ist zur Lieferung von Ladestrom an jeden der Sätze externer Anschlüsse, und

Verbindungsglieder (12, 13) die elektrisch mit der Primärwicklung verbunden sind und durch das Gehäuse zwischen den gegenüberliegenden Seiten hindurchführen zur Aufnahme durch einen externen elektrischen Behälter, wobei die Verbindungsglieder das Ladesystem haltern, wenn die Verbindungsglieder in dem Behälter angeordnet sind.

2. Batterie-Ladesystem nach Anspruch 1, dadurch gekennzeichnet, daß die externen Anschlüsse auf Oberflächen, die durch eine Wand begrenzt sind, angeordnet sind.

3. Batterie-Ladesystem nach Anspruch 1 oder 2, dadurch gekennzeichnet, daß die externen Anschlüsse (26—28, 30—32) auf vertieften Oberflächen (17, 19) auf den gegenüberliegenden Seiten angeordnet sind, um eine Wandbegrenzung der Oberflächen zu bilden.

4. Batterie-Ladesystem nach Anspruch 3, dadurch gekennzeichnet, daß die externen Anschlüsse (26—28, 30—32) relativ zu den vertieften Oberflächen (17, 19) asymmetrisch angeordnet sind.

5. Batterie-Ladesystem nach Anspruch 1 oder 2, dadurch gekennzeichnet, daß das Gehäuse (10) ein Gehäuseteil, das an einer Seite zwischen den gegenüberliegenden Seiten offen ist, und einen passenden Deckel (20) aufweist, der die offene Seite verschließt, wobei der passende Deckel (20) die Verbindungsglieder (12, 13) aufnimmt.

6. Batterie-Ladesystem nach Anspruch 1, dadurch gekennzeichnet, daß das Kernteil des Transformators (40) einen Rahmen (47, 51) aufweist, der um diesen herumführt, wobei der Lader ferner ein Erdstiftverbindungsglied (14) aufweist für eine Aufnahme durch den elektrischen Behälter, wobei das Erdstiftverbindungsglied mechanisch an dem Kernrahmen befestigt ist und von dort durch das Gehäuse hindurchführt.

7. Batterie-Ladesystem nach Anspruch 1, dadurch gekennzeichnet, daß das Kernteil (41) im wesentlichen parallel zu den gegenüberliegenden Seiten (16, 18) orientiert ist.

8. Batterie-Ladesystem nach Anspruch 7, wobei die Querschnittsabmessung des Kernteils (41) in Richtung des Abstandes zwischen den gegenüberliegenden Seiten (16, 18) kleiner ist als die Querschnittsabmessung des Kernteils (41) in Richtungen senkrecht zu der Abstandsrichtung.

9. Batterie-Ladesystem nach Anspruch 1, wobei der Transformator (40) und das Gehäuse (10), das die externen Anschlüsse (26—28, 30—32) enthält, eine mechanische Anordnung bilden, wobei der Transformator und das Gehäuse zusammenwirken, um wenigstens einen Teil irgendwelcher Kräfte zu übertragen, die auf das Gehäuse, auf die Transformatoranordnung und auf die Verbindungsglieder ausgeübt werden.

10. Batterie-Ladesystem nach Anspruch 1, wobei die ersten und zweiten Sätze externer Anschlüsse (26—28, 30—32) derart angeordnet sind, daß sie eine Polaritätskennzeichnung relativ zu den damit verbindbaren Batteriekreisen liefern.

11. Batterie-Ladesystem nach Anspruch 1, wobei einer der Batteriekreise durch einen der Batterie-Haltemoduln getragen ist und eine erste Diode aufweist, die einen Ladestromfluß durch einen der Kreise nur in einer Richtung gestattet.

12. Batterie-Ladesystem nach Anspruch 11, wobei der andere der Batteriekreise in dem Paar durch den anderen der Zellenhalterungsmodulen getragen ist und eine zweite Diode aufweist, die einen Ladestromfluß durch den anderen Kreis nur in einer Richtung gestattet.

## Revendications

1. Système de chargement de piles caractérisé en ce qu'il comprend:

— une paire de modules extérieurs de maintien de piles séparés (22), chacun des modules étant associé à un circuit de pile séparé pour recevoir au moins une pile rechargeable, chaque circuit de pile comportant des moyens unidirectionnels de circulation de courant pour permettre la circulation du courant dans une seule direction à travers son circuit de pile respectif;

— un boîtier (10) ayant des premier et deuxième ensembles de bornes extérieures (26 à 28, 30 à 32), placés sur des surfaces (17, 19) sur des côté opposés (16, 18) du boitier, le boitier ayant des moyens (17a, 19a) pour empêcher la mauvaise connexion des modules aux premier et deuxième ensembles de bornes extérieures, l'un des modules de la paire étant relié au et supporté de manière amovible par le premier ensemble de bornes tandis que l'autre module de la paire est relié électriquement au et supporté de manière amovible par le deuxième ensemble de bornes, une borne correspondante dans chacun des premier et deuxième ensembles de bornes extérieures étant adaptée pour être connectée de manière interchangeable à seulement une borne de chaque module, les bornes correspondantes dans chacun des ensembles ayant les polarités électriques instantanées opposées après raccordement du système de chargement à une source de courant;

— un transformateur (40) à l'intérieure du boitier comportant un noyau (41), un enroulement primaire (43), et un enroulement secondaire (45, 46) raccordés électriquement à chacun des ensembles de bornes extérieures à l'intérieur du boitier pour fournir un courant de charge à chacun des ensembles de bornes extérieures; et

— des connecteurs (12, 13) raccordés électriquement à l'enroulement primaire et s'étendant à travers le boitier entre les côtés opposés pour être reçus dans une prise électrique extérieure, les connecteurs étant adaptés pour supporter le système de charge lorsqu'ils sont placés dans la prise.

2. Système de chargement de pile selon la revendication 1, caractérisé en ce que les bornes extérieures sont situées sur des extrémités délimitées par une paroi.

3. Système de chargement de pile selon l'une quelconque des revendications 1 ou 2, caractérisé en ce que les bornes extérieures (26 à 28, 30 à 32), sont situées sur des surfaces en creux (17, 19) dans les côtés opposés de manière à former une paroi délimitant les dites surfaces.

4. Système de chargement de pile selon la revendication 3, caractérisé en ce que les bornes extérieures (26 à 28, 30 à 32) sont situées assymétriquement par rapport aux surfaces en creux (17, 19).

5. Système de chargement de pile selon la revendication 1 ou 2, caractérisé en ce que le boitier (10) comporte un élément le boitier ouvert sur un côté entre les côtés opposés, et un couvercle adapté (20) fermant le côté ouvert, le couvercle adapté (20) recevant les connecteurs (12, 13).

6. Système de chargement de pile selon la revendication 1, caractérisé en ce que le noyau du transformateur (40) comporte une armature (47, 51) s'étendant tout autour, le chargeur comportant en outre, une broche de mise à la masse (14) adaptée pour être reçue par la prise électrique, la broche de mise à la masse étant fixée mécaniquement à l'armature du noyau et s'étendant à partir de là dans le boitier.

7. Système de chargement de pile selon la revendication 1, caractérisé en ce que le noyau (41) est orienté pratiquement parallèlement aux côtés opposés (16, 18).

8. Système de chargement de pile selon la revendication 7, caractérisé en ce que la dimension en coupe du noyau (41) dans le sens de l'intervalle entre les côtés opposés (16, 18) est inférieur à la dimension en coupe du noyau (41) dans des directions mutuellement orthogonales à la direction au sens le l'intervalle.

9. Système de chargement de pile selon la revendication 1, caractérisé en ce que le transformateur (40) et le boîtier (10) contenant les bornes extérieures (26 à 28, 30 à 32) forment un ensemble mécanique, le transformateur et le boitier agissant en combinaison pour transmettre au moins une partie d'une force quelconque appliquée au boitier vers le transformateur et les connecteurs.

10. Système de chargement de pile selon la revendication 1, caractérisé en ce que les premier et deuxième ensembles de bornes extérieures (26 à 28, 30 à 32) sont disposées pour réaliser un calage de leur polarité par rapport aux circuits de pile que l'on peut y raccorder.

11. Système de chargement de pile selon la revendication 1, caractérisé en ce que l'un des circuits de pile est supporté par l'un des modules de maintien de pile et comporte une première diode fonctionnant pour permettre au courant de charge de s'écouler à travers ledit circuit dans une seule direction.

12. Système de chargement de pile selon la revendication 11, caractérisé en ce que l'autre circuit de pile est porté par l'autre module de maintien de pile et comporte une deuxième diode qui permet au courant de charge de s'écouler à travers l'autre circuit dans une seule direction.

FIG. 1

FIG. 2

FIG. 3

FIG. 4

FIG. 5

FIG.6

FIG.7